Europäisches Patentamt

European Patent Office

Office européen des brevets

(19)

(11) Veröffentlichungsnummer: **0 333 929 B1**

(12) **EUROPÄISCHE PATENTSCHRIFT**

(45) Veröffentlichungstag der Patentschrift: **26.05.93**

(21) Anmeldenummer: **88121670.9**

(22) Anmeldetag: **24.12.88**

(51) Int. Cl.⁵: **G01B 11/02**, G01D 5/38

(54) **Lichtelektrische Positionsmesseinrichtung.**

(30) Priorität: **25.03.88 DE 3810165**

(43) Veröffentlichungstag der Anmeldung:
**27.09.89 Patentblatt 89/39**

(45) Bekanntmachung des Hinweises auf die
Patenterteilung:
**26.05.93 Patentblatt 93/21**

(84) Benannte Vertragsstaaten:
**AT CH DE FR GB IT LI**

(56) Entgegenhaltungen:
**EP−A− 0 163 362**
**DE−A− 2 003 492**
**DE−B− 2 238 413**

(73) Patentinhaber: **Dr. Johannes Heidenhain GmbH**
**Dr.− Johannes− Heidenhain− Strasse 5**
**Postfach 1260**
**W− 8225 Traunreut(DE)**

(72) Erfinder: **Spies, Alfons, Dipl.− Ing.**
**Wopfnerstrasse 2**
**W− 8221 Seebruck(DE)**

**Beschreibung**

Die Erfindung bezieht sich auf eine lichtelektrische Positionsmeßeinrichtung nach dem Oberbegriff des Anspruches 1.

In der DE-C2-24 31 551 ist eine derartige Anordnung beschrieben. Eine erste Ausführungsform sogenannter Dreigitter-Meßanordnungen besteht aus drei transparenten Gittern, die nacheinander von dem einfallenden Licht durchdrungen werden. In einer zweiten Ausführungsform ist eine Anordnung beschrieben, die aus nur zwei Gittern besteht, von denen eines transparent und das zweite als Reflexionsgitter ausgebildet ist. Bei den dort beschriebenen Anordnungen kann die Gitterkonstante der verwendeten Gitter nicht kleiner sein, als die Wellenlänge des verwendeten Lichtes. Die Auflösung der Meßanordnung ist dadurch begrenzt.

Eine weitere Dreigitter-Meßanordnung ist in der EP-A1-163 362 beschrieben. Durch die besondere Ausgestaltung der dort gezeigten Phasengitter in Bezug auf Phasenhub und Tastverhältnis (Steg/Furche) entstehen drei Lichtstrahlenbündel, die bei Relativbewegungen der Gitter zueinander Intensitätsmodulationen erfahren, die in ihrer Phase zueinander versetzt sind (vorzugsweise 120˚). Von dieser Anordnung wird im Oberbegriff des unabhängigen Anspruches ausgegangen.

Aus der DE-A1-21 46 310 ist eine sogenannte Zweigitter-Meßanordnung bekannt, bei der die Gitterkonstanten der verwendeten Gitter kleiner sind, als die Wellenlänge des einstrahlenden Lichtes. Ein prinzipieller Nachteil solcher interferometrischer Zweigitter-Meßanordnungen liegt darin, daß sie empfindlich sind auf Schwankungen des Abstandes der Gitter zueinander und abhängig sind von der räumlichen Kohärenz des verwendeten Lichtes.

Aufgabe der Erfindung ist es, demgegenüber eine Positionsmeßeinrichtung mit wirkungsmäßig drei Gittern zu schaffen, die interferometrisch abgetastet werden und auch Gitterkonstanten zulassen, die kleiner sind, als die Wellenlänge des verwendeten Lichtes. Darüber hinaus sollen die Abtastsignale oberwellenfrei sein.

Diese Aufgabe wird von einer Positionsmeßeinrichtung mit den Merkmalen des Anspruches 1 gelöst.

Mit Hilfe von Ausführungsbeispielen soll die Erfindung anhand der stark schematisierten Zeichnungen noch näher erläutert werden.

Es zeigt

Figur 1 eine Durchlicht-Anordnung,

Figur 2 eine Ausschnittvergrößerung eines Phasengitters und

Figur 3 eine Ausschnittvergrößerung eines anderen Phasengitters.

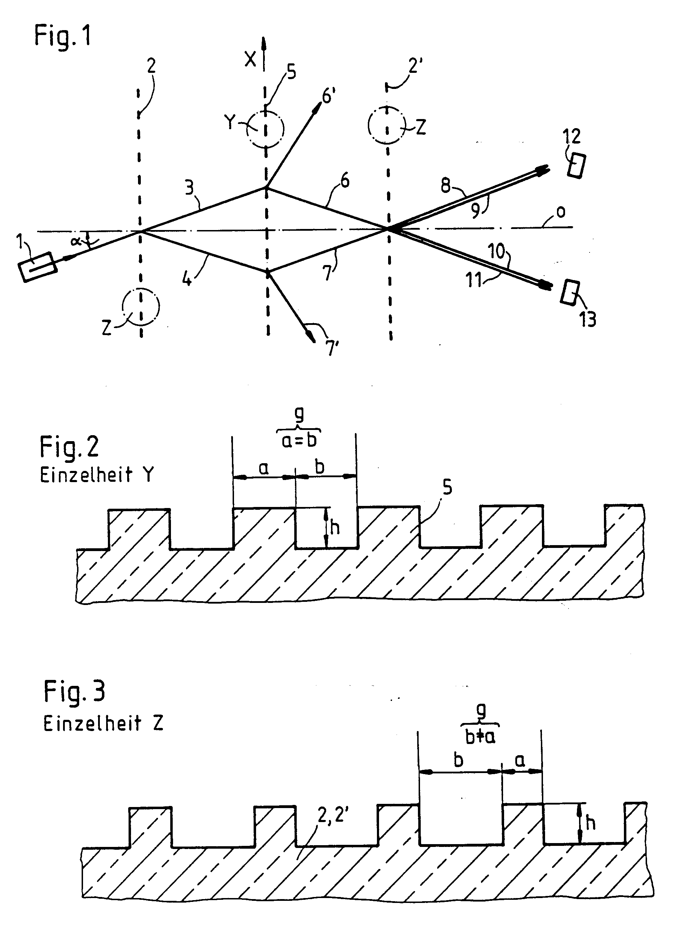

Bei der in Figur 1 dargestellten Durchlicht-Anordnung wird von einer Lichtquelle 1, die schmalbandiges Licht aussendet, ein Phasengitter 2 unter einem Winkel $\alpha$ zur Gitternormalen 0 beleuchtet. Der Winkel $\alpha$ bestimmt sich nach der Formel $\sin \alpha = \lambda / 2g$, wobei $\lambda$ die Wellenlänge des verwendeten Lichtes und g die Gitterkonstante ist. Hinter dem Phasengitter 2 entstehen durch Beugung zwei Teilstrahlenbündel 3 und 4 der Beugungsordnungen "0" und "1". Diese Teilstrahlenbündel 3 und 4 treffen auf ein weiteres Gitter 5, das vorzugsweise ebenfalls als Phasengitter ausgebildet ist. Dieses Gitter 5 ist so ausgelegt, daß keine nullte Beugungsordnung entsteht. Diese Auslegung kann in bekannter Weise durch die Oberflächengestaltung des Gitters 5 erfolgen, z.B. bei einem Gitter mit Rechteckprofil durch Variation der Stufenhöhe, was der Variation des Phasenhubes entspricht (s. Figur 2).

Da auch beim Gitter 5 die Gitterkonstante g kleiner als die Wellenlänge $\lambda$ ist, entstehen auch keine Beugungsordnungen mit einer Ordnungszahl größer als "1". Von den vier am Gitter 5 durch Beugung entstehenden Teilstrahlenbündel 6, 6'; 7, 7' werden nur die zur Gitternormalen 0 hingebeugten Teilstrahlenbündel 6 und 7 verwendet. Die Teilstrahlenbündel 6 und 7 treffen auf ein weiteres Gitter 2' – das in seinen physikalischen Eigenschaften identisch mit dem Gitter 2 ist – und werden an diesem Gitter 2' wiederum gebeugt. Hinter dem Gitter 2' erhält man also vier gebeugte Teilstrahlenbündel 8, 9, 10, 11. Jeweils zwei der Teilstrahlenbündel, nämlich 8 und 9 sowie 10 und 11 haben die gleiche Richtung und können somit miteinander interferieren.

Bei Verschiebung des Gitters 5 um den Betrag x gegenüber den Gittern 2 und 2' erhalten die am Gitter 5 gebeugten Teilstrahlenbündel 6 und 7 eine Phasenverschiebung $\Phi = 2\pi x/g$ bzw. $\Phi = -2\pi x/g$.

Die Gitter 2 und 2' sind so ausgelegt, daß bei der Beugung eines Strahles die entstehenden Teilstrahlen der nullten und ersten Ordnung eine konstante Phasenschiebung um den Betrag $\Theta$ erhalten. Die Teilstrahlenbündel 3 und 4 sind also in ihrer Phase um den Betrag $\Theta$ zueinander verzögert. Ebenso die aus dem Teilstrahlenbündel 6 am Gitter 2' entstandenen Teilstrahlenbündel 8 und 10 sowie die aus dem Teilstrahlenbündel 7 entstandenen Teilstrahlenbündel 9 und 11.

Die vorgenannte Phasenverschiebung um den Betrag $\Theta$ wird durch eine besondere Auslegung der Gitter 2 und 2' erzielt. Eine mögliche Ausführungsform ist in der EP-A1-163 362 offenbart. Diese besondere Auslegung besteht bei einem Phasengitter mit rechteckigen Profil darin, daß das Steg-/Furchenverhältnis (Tastverhältnis) a:b merklich von 1:1 abweicht und die Stufenhöhe h gemäß Figur 2 so ausgelegt ist, daß das Gitter 2, 2′ einen deutlich von π radian abweichenden Phasenhub hat.

Die interferierenden Teilstrahlenbündel 8 und 9 bzw. 10 und 11 fallen auf Fotoelemente 12 und 13 und werden in elektrische Signale umgewandelt, die in bei inkrementalen Positionsmeßeinrichtungen bekannter Weise ausgewertet werden.

Die Signale können dabei durch folgende Formeln beschrieben werden: Für das Fotoelement 12

$$I\,12 = K\,(1 - \cos\,(2 \cdot 2\pi x/g))\;\text{und}$$

für das Fotoelement 13

$$I\,13 = K\,(1 - \cos\,(2(2\pi x/g - \Theta))),$$

wobei K eine Konstante, x die Verschiebung der Gitter 2, 2' und 5 zueinander und Θ die schon beschriebene Phasenverschiebung bezeichnet.

Nach dem vorbeschriebenen Beispiel läßt sich in analoger Weise auch eine Positionsmeßeinrichtung nach dem Auflichtprinzip realisieren. Das Gitter 5 ist dabei als Reflexionsgitter ausgebildet und die Gitter 2 und 2' sind körperlich identisch. Die Figur 1 kann für diesen Fall als "entfaltete" Darstellung angesehen werden. Dieses Beispiel zeigt Fall, bei dem alle Gitter 2, 2' und 5 die gleiche Gitterkonstante g aufweisen.

Die Vorteile der erfindungsgemäßen Positionsmeßeinrichtung gegenüber den in der Beschreibungseinleitung erwähnten Anordnungen liegen darin, daß eine hohe Auflösung ohne nachfolgende Interpolation erreicht wird, daß der Abstand der Gitter zueinander in weiten Grenzen schwanken kann, ohne daß die Signale nachteilig beeinflußt werden. Ferner wird nur eine geringe Anforderung an die räumliche Kohärenz der Lichtquelle gestellt. Des weiteren sind die an den Fotoelementen entstehenden Signale oberwellenfrei, da sie durch die Interferenz von nur zwei Teilstrahlen entstehen, so daß eine optimale Auswertung dieser Signale gewährleistet ist.

**Patentansprüche**

1. Lichtelektrische Positionsmeßeinrichtung zum Messen von Längen oder Winkeln nach dem Durchlicht– oder Auflichtprinzip, mittels mehrerer zueinander verschieblicher Gitter, die von einer Lichtquelle kommendes Licht beugen und die gebeugten Teilstrahlenbündel zur Interferenz bringen, wobei die durch Interferenz entstehenden Intensitätsmodulationen der Teilstrahlenbündel durch Fotodetektoren in zueinander phasenversetzte elektrische Signale umgewandelt werden, dadurch gekennzeichnet, daß der Einfallswinkel (α) des Lichtes zur Gitternormalen (0) sowie die physikalischen Eigenschaften des ersten Gitters (2) so gewählt sind, daß nur das Teilstrahlenbündel (3) der nullten Beugungsordnung und das Teilstrahlenbündel (4) der der Gitternormalen (0) am nächsten liegenden ersten Beugungsordnung zur Signalbildung durch Beugung am zweiten Gitter (5) beitragen und die genannten Teilstrahlenbündel (3, 4) zueinander eine Phasenschiebung um den Betrag Θ erhalten, daß die physikalischen Eigenschaften des zweiten Gitters (5) so gewählt sind, daß die einfallenden Teilstrahlenbündel (3, 4) nur in Teilstrahlenbündel (6, 6'; 7, 7') ihrer ersten Beugungsordnungen zerlegt werden, und daß die der Gitternormalen (0) am nächsten liegenden Teilstrahlenbündel (6, 7) durch Beugung am dritten Gitter (2'), welches gleichartig mit dem ersten Gitter (2) ist, zur Interferenz gebracht werden.

2. Meßeinrichtung nach Anspruch 1, dadurch gekennzeichnet, daß der Einfallswinkel (α) so gewählt ist, daß die Bedingung $\alpha = \arcsin\left(\frac{\lambda}{2g}\right)$ erfüllt ist.

3. Meßeinrichtung nach Anspruch 1, dadurch gekennzeichnet, daß die Gitterkonstanten (g) aller Gitter (2,2′,5) kleiner als die Wellenlänge (λ) des verwendeten Lichtes ist.

4. Meßeinrichtung nach Anspruch 1, dadurch gekennzeichnet daß die Gitterkonstanten (g) aller Gitter (2,2′,5) gleich sind.

5. Meßeinrichtung nach Anspruch 1, dadurch gekennzeichnet, daß das Steg-/Furchenverhältnis (Tastverhältnis) des ersten und dritten Gitters (2,2′) merklich von 1:1 abweicht, während diese Verhältnis beim zweiten Gitter (5) 1:1 ist und daß der Phasenhub des ersten und dritten Gitters (2,2′) von π radian merklich abweicht und beim zweiten Gitter (5) gleich π radian ist.

6. Meßeinrichtung nach Anspruch 1, dadurch gekennzeichnet, daß das erste und dritte Gitter (2,2′) Abtastgitter und das zweite Gitter (5) den Maßstab einer inkrementalen Meßeinrichtung verkörpern.

7. Meßeinrichtung nach Anspruch 6, dadruch gekennzeichnet, daß alle Gitter (2,2′,5) als transparente Gitter einer Durchlichtmeßeinrichtung ausgebildet sind.

**8.** Meßeinrichtung nach Anspruch 6, dadurch gekennzeichnet, daß das erste und dritte Gitter (2,2′) transparent und körperlich identisch sind, und daß das zweite Gitter (5) reflektierend als Gitter einer Auflichtmeßeinrichtung ausgebildet sind.

**9.** Meßeinrichtung nach Anspruch 1, dadurch gekennzeichnet, daß die Lichtquelle (1) eine Halbleiter – Laserdiode mit nachgeschaltetem Kollimator zur Erzeugung eines ebenen Wel – lenfeldes ist.

## Claims

**1.** A photoelectric position measuring device for measuring lengths or angles by the transmitted light or reflected light principle, by means of a plurality of gratings movable relative to one other, which diffract light from a light source and bring the diffracted bundles of rays into interference, whereby the intensity modulations of the bundles of rays resulting from the in – terference are converted into phase displaced electrical signals by photo – detectors, char – acterized in that the angle of incidence ($\alpha$) of the light relative to the grating normals (0) as well as the physical characteristics of the first grating (2) are so selected that only the bundle of rays (3) of zero order and the bundle of rays (4) of the first order lying nearest to the grating normals (0) contribute to signal formation by diffraction at the second grating (5) and the said bundles of rays (3, 4) have a phase dis – placement relative to one another of the mag – nitude $\Theta$, in that the physical characteristics of the second grating (5) are so selected that the incident bundles of rays (3, 4) are only split into bundles of rays (6, 6'; 7, 7') of their first order, and in that the bundles of rays (6, 7) lying nearest to the grating normals (0) are brought into interference at the third grating (2'), which is of the same knad as the first grating (2).

**2.** A measuring device according to claim 1, characterized in that the angle of incidence ($\alpha$) is so selected that it fulfils the condition $\alpha$ = arcsin($\lambda$/2g).

**3.** A measuring device according to claim 1, characterized in that the grating constants (g) of all gratings (2, 2', 5) are smaller than the wavelength ($\lambda$) of the light used.

**4.** A measuring device according to claim 1, characterized in that the grating constants (g) of all gratings (2, 2', 5) are the same.

**5.** A measuring device according to claim 1, characterized in that the line/space ratio (sensing ratio) of the first and third gratings (2, 2') differs markedly from 1:1 while this ratio is 1:1 at the second grating (5) and in that the phase delay of the first and third gratings (2, 2') deviates markedly from $\pi$ radians and is equal to $\pi$ radians for the second grating (5).

**6.** A measuring device according to claim 1, characterized in that the first and third gratings (2, 2') implement sensing gratings and the second grating (5) implements the measuring scale of an incremental measuring device.

**7.** A measuring device according to claim 7, characterized in that all gratings (2, 2', 5) are formed as transparent gratings of a transmitted light measuring device.

**8.** A measuring device according to claim 6, characterized in that the first and third gratings (2, 2') are transparent and physically the same and in that the second grating (5) is formed as a reflecting grating of a reflected light mea – suring device.

**9.** A measuring device according to claim 1, characterized in that the light source (1) is a semiconductor laser diode followed by a col – limator for generating a plane wavefront.FM

## Revendications

**1.** Dispositif de mesure de position pour la me – sure de longueurs et d'angles suivant le prin – cipe de la lumière transmise ou de la lumière réfléchie au moyen de plusieurs réseaux qui peuvent se déplacer les uns par rapport aux autres, diffractent la lumière émise par une source lumineuse et amènent en interférence les faisceaux partiels diffractés, les modula – tions d'intensité des faisceaux partiels obte – nues parinterférence étant transformées en signaux électriques mutuellement déphasés par des détecteurs photo – électriques, carac – térisé par le fait que l'angle d'incidence ($\alpha$) de la lumière par rapport à la normale au réseau (O) et les propriétés physiques du premier réseau (2) sont choisis tels, que seul le fais – ceau partiel (3) d'ordre de diffraction zéro et le faisceau partiel (4) du premier ordre de dif – fraction le plus proche de la normale au réseau (O) participent à la formation du signal par diffraction sur le deuxième réseau (5) et lesdits faisceaux partiels (3, 4) sont déphasés l'un par rapport à l'autre de la valeur $\Theta$, que les pro – priétés physiques du deuxième réseau (5) sont choisies telles que les faisceaux partiels (3, 4) incidents soient divisés uniquement en faisceaux partiels (6, 6'; 7, 7') de leurs premiers ordres de diffraction et que les faisceaux partiels (6, 7) les plus proches de la normale au réseau (O) soient amenés en interférence par diffraction sur le troisième réseau (2') qui est semblable au premier (2).

2. Dispositif de mesure selon la revendication 1, caractérisé par le fait que l'angle d'incidence (α) est choisi de manière à remplir la condition α = arcsin (λ/2g).

3. Dispositif de mesure selon la revendication 1, caractérisé par le fait que les constantes de réseau (g) de tous les réseaux (2, 2', 5) sont plus petites que la longueur d'onde (λ) de la lumière utilisée.

4. Dispositif de mesure selon la revendication 1, caractérisé par le fait que les constantes de réseau (g) de tous les réseaux (2, 2', 5) sont identiques.

5. Dispositif de mesure selon la revendication 1, caractérisé par le fait que le rapport saillies/sillons (rapport de lecture) du premier et du troisième réseau (2, 2') est nettement différent de 1:1 tandis qu'il est de 1:1 pour le deuxième réseau (5) et que l'écart de phase du premier et du troisième réseau (2, 2') est nettement différent de $\pi$radian tandis qu'il est égal à $\pi$radian pour le deuxième réseau (5).

6. Dispositif de mesure selon la revendication 1, caractérisé par le fait que le premier et le troisième réseau (2, 2') sont des réseaux de lecture et le deuxième réseau (5) constitue la règle d'un dispositif de mesure incrémental.

7. Dispositif de mesure selon la revendication 6, caractérisé par le fait que tous les réseaux (2, 2' 5) sont agencés sous forme de réseaux transparents d'un dispositif de mesure à lumière transmise.

8. Dispositif de mesure selon la revendication 6, caractérisé par le fait que le premier et le troisième réseaux (2, 2') sont transparent et physiquement identiques et que le deuxième réseau (5) réfléchissant est agencé sous forme de réseau d'un dispositif de mesure par réflexion.

9. Dispositif de mesure selon la revendication 1, caractérisé par le fait que la source lumineuse (1) est une diode laser à semiconducteur suivie d'un collimateur pour produire champ d'ondes plan.

Fig. 1

Fig. 2
Einzelheit Y

$$\frac{g}{a=b}$$

Fig. 3
Einzelheit Z

$$\frac{g}{b+a}$$